# EUROPÄISCHE PATENTANMELDUNG

(11) **EP 4 501 674 A1**
(43) Veröffentlichungstag der Anmeldung: **05.02.2025**
(21) Anmeldenummer: 23189396.7
(22) Anmeldetag: 03.08.2023
(51) Int. Cl.: B60K 1/00, H02K 7/00

(54) **ANTRIEBSEINHEIT FÜR EIN ELEKTROFAHRZEUG**

(71) Anmelder: Knaus, Gottfried, 8054 Seiersberg-Pirka (AT)
(72) Erfinder: Knaus, Gottfried, 8054 Seiersberg-Pirka (AT)
(74) Vertreter: Wirnsberger & Lerchbaum Patentanwälte OG

(57) **Zusammenfassung**

Die Erfindung betrifft eine Antriebseinheit (1) für ein Elektrofahrzeug, aufweisend einen Elektromotor mit einem Rotor (4) und einem Stator (3), welcher Elektromotor auf eine erste Ausgangswelle (5) und eine zweite Ausgangswelle (6) wirkt, wobei die erste Ausgangswelle (5) und die zweite Ausgangswelle (6) koaxial mit dem Rotor (4) sind. Um einen besonders einfachen Aufbau zu erreichen, ist erfindungsgemäß vorgesehen, dass der Elektromotor als Außenläufermotor ausgebildet und der Rotor (4) starr mit einem Differentialkorb (8) eines Differentialgetriebes (7) verbunden ist, welches Differentialgetriebe (7) zwei Ausgänge aufweist, wobei ein erster Ausgang des Differentialgetriebes (7) starr mit der ersten Ausgangswelle (5) und ein zweiter Ausgang des Differentialgetriebes (7) starr mit der zweiten Ausgangswelle (6) verbunden sind.

## Beschreibung

Die Erfindung betrifft eine Antriebseinheit für ein Elektrofahrzeug, aufweisend einen Elektromotor mit einem Rotor und einem Stator, welcher Elektromotor auf eine erste Ausgangswelle und eine zweite Ausgangswelle wirkt, wobei die erste Ausgangswelle und die zweite Ausgangswelle koaxial mit dem Rotor sind.

Aus dem Stand der Technik sind verschiedene Antriebseinheiten für Elektrofahrzeuge bekannt geworden. Beispielsweise zeigen die Dokumente DE 10 2020 000 664 A1, DE 10 2017 110 581 A1, DE 11 2019 003 008 T5, EP 3 597 461 A1, DE 198 41 159 A1, DE 10 2019 207 784 A1, ES2159471 B1 und US8992367 B2 Antriebe für Elektrofahrzeuge, bei welchen ein Elektromotor mit einem Differentialgetriebe verbunden ist.

Antriebseinheiten des Standes der Technik haben sich jedoch als sehr aufwändig, kompliziert herstellbar und folglich teuer erwiesen.

Hier setzt die Erfindung an. Aufgabe der Erfindung ist es, eine besonders einfach aufgebaute Antriebseinheit für ein Elektrofahrzeug anzugeben.

Diese Aufgabe wird erfindungsgemäß durch eine Antriebseinheit der eingangs genannten Art gelöst, bei welcher der Elektromotor als Außenläufermotor ausgebildet und der Rotor starr mit einem Differentialkorb eines Differentialgetriebes verbunden ist, welches Differentialgetriebe zwei Ausgänge aufweist, wobei ein erster Ausgang des Differentialgetriebes starr mit der ersten Ausgangswelle und ein zweiter Ausgang des Differentialgetriebes starr mit der zweiten Ausgangswelle verbunden sind.

Im Rahmen der Erfindung wurde erkannt, dass sich durch eine unmittelbare Verbindung des Rotors des Außenläufermotors mit einem Differentialkorb des Differentialgetriebes ein besonders einfacher Aufbau ergibt, während bei Antriebseinheiten des Standes der Technik stets ein Untersetzungsgetriebe zwischen dem Elektromotor und dem Differential angeordnet ist. Dadurch kann die Antriebseinheit mit wesentlich weniger Teilen als Antriebseinheiten des Standes der Technik aufgebaut sein, wodurch eine Komplexität reduziert ist und eine günstige Herstellbarkeit erreicht wird.

Bevorzugt sind die erste Ausgangswelle und die zweite Ausgangswelle drehfest mit Rädern eines Fahrzeuges verbunden, beispielsweise mit Vorderrädern eines Elektroautos. Der Motor wird somit im Unterschied zu Motoren des Standes der Technik, welche teilweise aufgrund des zwischengeschalteten Untersetzungsgetriebes mit sehr hohen Drehzahlen betrieben werden, mit einer vergleichsweise niedrigen Drehzahl betrieben. Bei einem mit einer erfindungsgemäß ausgebildeten Antriebseinheit ausgebildeten Elektrofahrzeug rotieren die Räder somit bei einer Geradeausfahrt üblicherweise mit Rotordrehzahl.

Es hat sich als günstig erwiesen, wenn das Differentialgetriebe als Kegel-Differentialgetriebe ausgebildet ist. Dies ermöglicht eine günstige Leistungsaufteilung auf die beiden Ausgangswellen auch bei unterschiedlichen Drehzahlen, insbesondere bei einer Kurvenfahrt. Im Differentialkorb des Differentialgetriebes sind üblicherweise ein oder mehrere Ausgleichszahnräder gelagert, wobei in der Regel jedes Ausgleichszahnrad in Zahnräder an der ersten Ausgangswelle und der zweiten Ausgangswelle eingreift. Die Ausgleichszahnräder können über Zapfen im Differentialkorb gelagert sein.

Es hat sich bewährt, dass ein mit dem Stator starr verbundenes Gehäuse vorgesehen ist, welches den Rotor und das Differentialgetriebe einschließt. Dadurch ergibt sich eine sehr kompakte Bauweise, die in unterschiedlichste Elektrofahrzeuge eingebaut werden kann.

Bevorzugt ist ein erstes Lager vorgesehen, welches die erste Ausgangswelle mit dem Stator verbindet. Das Lager kann beispielsweise als Kegelrollen-, Kugel-, Nadel- oder Zylinderrollenlager ausgebildet sein und ist in aller Regel koaxial mit dem Rotor.

Günstig ist es, wenn ein zweites Lager vorgesehen ist, welches den Stator mit dem Rotor verbindet. Auch dieses Lager ist üblicherweise als Kegelrollen-, Kugel- oder Zylinderrollenlager ausgebildet.

Es hat sich bewährt, dass ein drittes Lager vorgesehen ist, welches das Gehäuse mit dem Differentialkorb verbindet. Das Gehäuse ist somit über das dritte Lager drehbar mit dem Differentialgetriebe verbunden, welches dritte Lager in aller Regel ebenfalls als Kegelrollen-, Kugel- oder Zylinderrollenlager ausgebildet ist.

Die Antriebseinheit kann grundsätzlich ausschließlich mit diesen drei Lagern, erstem Lager, zweitem Lager und drittem Lager ausgebildet sein, sodass ein besonders einfacher Aufbau erreicht wird. Der Rotor ist dann einerseits über das erste Lager gegenüber dem Stator, welcher starr mit dem Gehäuse verbunden ist, und über den Differentialkorb, mit welchem der Rotor starr verbunden ist, und das dritte Lager im Gehäuse gelagert, sodass sich ein besonders einfacher und gleichzeitig stabiler Aufbau ergibt.

Günstig ist es, wenn der Stator einen zentralen ersten Hohlraum aufweist, in welchem die erste Ausgangswelle positioniert ist. Die erste Ausgangswelle ragt somit üblicherweise durch den Elektromotor hindurch und ist koaxial mit dem Elektromotor, wodurch sich eine besonders kompakte Bauweise ergibt.

Grundsätzlich kann das Differentialgetriebe an jeder Position angeordnet sein. Günstig ist es, wenn das Differentialgetriebe koaxial mit dem Rotor ist. Achsen von Ausgleichszahnrädern im Differentialgetriebe sind üblicherweise normal zum Rotor bzw. zu Längsachsen der Ausgangswellen. Es hat sich bewährt, dass das Differentialgetriebe an einer Stirnseite des Rotors angeordnet ist. Dies ermöglicht einen besonders einfachen Aufbau.

Die Pole des Rotors können grundsätzlich auf jede aus dem Stand der Technik bekannte Weise ausgebildet sein, beispielsweise auch durch stromdurchflossene Spulen. Günstig ist es, wenn der Rotor durch Permanentmagnete ausgebildete Pole aufweist. Dadurch kann eine Übertragung von elektrischer Energie in den Rotor entfallen, welche mit Verlusten verbunden wäre.

Günstig ist es, wenn der Stator Spulen aufweist. Über die Spulen wird somit ein rotierendes elektrisches Feld erzeugt, welches die Rotation des außenliegenden Rotors bewirkt.

Um eine besonders leichtgewichtige Bauweise zu erreichen ist bevorzugt vorgesehen, dass die erste Ausgangswelle und/oder die zweite Ausgangswelle aus Hohlwellen ausgebildet sind.

Günstig ist es, wenn der Stator einen zweiten, stirnseitig abgeschlossenen, vorzugsweise umlaufenden Hohlraum aufweist. Dadurch kann Gewicht minimiert werden.

Ein besonders einfacher Aufbau ergibt sich, wenn der Stator einen inneren Zylinder und einen äußeren Zylinder aufweist, welche durch eine stirnseitige Verbindungsscheibe verbunden sind. Bevorzugt sind der innere Zylinder, der äußere Zylinder und die Verbindungsscheibe aus Metall gebildet und einteilig, sodass sich eine robuste und kostengünstige Bauweise ergibt.

Für einen konstruktiv einfachen Aufbau sowie eine gleichzeitig einfache Montage ist bevorzugt vorgesehen, dass der Stator einen äußeren Zylinder aufweist, an welchem Spulen angeordnet sind, welcher äußere Zylinder einseitig mit einer normal zu einer Rotationsachse angeordneten, kreisringförmigen Scheibe verbunden ist, an welcher Scheibe die Spulen anliegen.

Bei einem Elektrofahrzeug, insbesondere einem Elektroauto, welches zumindest eine Batterie und eine durch die Batterie mit Energie versorgte Antriebseinheit aufweist, ist bevorzugt vorgesehen, dass die Antriebseinheit erfindungsgemäß ausgebildet ist.

Weitere Merkmale, Vorteile und Wirkungen der Erfindung ergeben sich anhand des nachfolgend dargestellten Ausführungsbeispiels. In der Zeichnung, auf welche dabei Bezug genommen wird, zeigt:

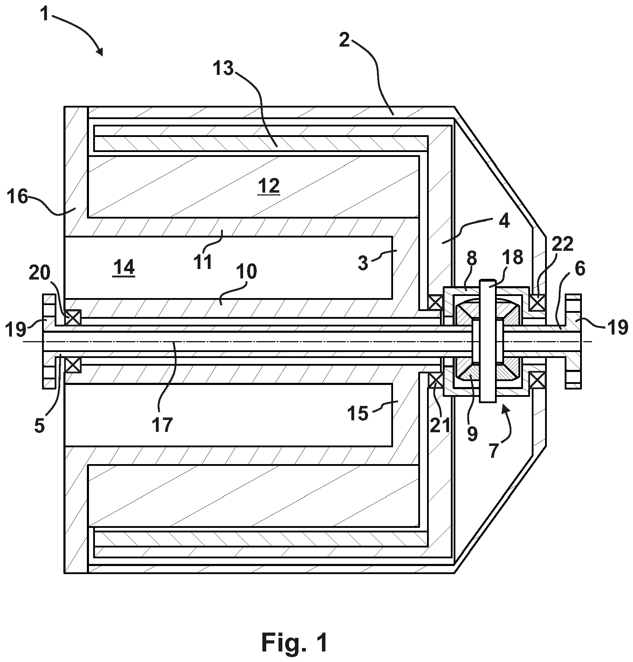

Fig. 1 einen Achsenschnitt durch eine erfindungsgemäße Antriebseinheit.

Fig. 1 zeigt einen Schnitt durch eine erfindungsgemäße Antriebseinheit 1, wobei sich die Schnittebene in einer Ebene befindet, in welcher eine Rotationsachse 17 des Elektromotors liegt.

Wie ersichtlich weist der als Außenläufermotor ausgebildete Elektromotor einen innenliegenden Stator 3 und einen außenliegenden Rotor 4 auf, welche im Wesentlichen rotationssymmetrisch zur Rotationsachse 17 der Antriebseinheit 1 sind. Der Rotor 4 ist starr mit einem Differentialkorb 8 eines Differentialgetriebes 7 verbunden, welches eine Leistung des Elektromotors auf eine erste Ausgangswelle 5 und eine zweite Ausgangswelle 6 aufteilt.

Der Stator 3 weist einen inneren Zylinder 10 und einen äußeren Zylinder 11 auf, welche durch einen Hohlraum 14 beabstandet und durch eine kreisringförmige Verbindungsscheibe 15 stirnseitig verbunden sind.

Der innere Zylinder 10 umschließt die erste Ausgangswelle 5, welche von einem stirnseitig angeordneten Differentialgetriebe 7 durch den Elektromotor hindurch ragt und im Stator 3 über ein erstes Lager 20 gelagert ist. Die erste Ausgangswelle 5 weist hier endseitig einen Flansch 19 zur Anbindung eines Rades eines Elektrofahrzeuges oder dergleichen auf. Üblicherweise werden zwei Räder eines Elektrofahrzeuges drehfest mit den Ausgangswellen 5, 6 verbunden, sodass sich ein besonders einfacher Aufbau, insbesondere ohne Untersetzungsgetriebe zwischen Elektromotor und den Rädern, ergibt und die Räder bei einer Geradeausfahrt mit einer Drehzahl des Rotors 4 rotieren.

Der äußere Zylinder 11 weist Spulen 12 auf, durch welche ein Magnetfeld für eine Rotation des Rotors 4 erzeugt werden kann. Die Spulen 12 liegen endseitig an einer kreisringförmigen Scheibe 16 an, welche den Stator 3 an einer dem Differentialgetriebe 7 gegenüberliegenden Stirnseite abschließt und über welche kreisringförmige Scheibe 16 der Stator 3 auch mit einem Gehäuse 2 verbunden ist, welches den Rotor 4 und das Differentialgetriebe 7 einschließt.

Der Rotor 4 weist ein etwa hohlzylindrisch ausgebildetes Element auf, welches den Stator 3 umschließt und an welchem innenseitig Permanentmagnete 13 angeordnet sind, und ist stirnseitig zum einen mit dem Differentialgetriebe 7 und zum anderen über ein zweites Lager 21 mit dem Stator 3 verbunden bzw. durch das zweite Lager 21 drehbar gegenüber dem Stator 3 gelagert.

Der Rotor 4 des Elektromotors samt dem Differentialgetriebe 7 werden durch das Gehäuse 2 eingeschlossen, welches Gehäuse 2 über ein drittes Lager 22 mit dem Differentialkorb 8 des Differentialgetriebes 7 verbunden ist. Wie ersichtlich ist das etwa glockenförmige Gehäuse 2 mit einem der Stirnseite, an welcher das Differentialgetriebe 7 angeordnet ist, gegenüberliegenden Ende des Stators 3 an einer kreisringförmigen Scheibe 16 des Stators 3 verbunden, welche kreisringförmige Scheibe 16 mit dem äußeren Zylinder 11 des Stators 3 verbunden ist, wodurch sich eine kompakte Bauweise ergibt. Somit kann die erfindungsgemäße Antriebseinheit 1 mit nur drei Lagern gebildet werden und leicht in unterschiedlichste Elektrofahrzeuge eingebaut werden.

Das Differentialgetriebe 7 ist im dargestellten Ausführungsbeispiel als Kegel-Differentialgetriebe 7 ausgebildet und weist Ausgleichszahnräder 9 auf, welche an einem im Differentialkorb 8 angeordneten Zapfen 18 gelagert sind und in Zahnräder sowohl an erster Ausgangswelle 5 als auch an zweiter Ausgangswelle 6 eingreifen, sodass sich eine günstige Aufteilung der Leistung des Elektromotors auf erste Ausgangswelle 5 und zweite Ausgangswelle 6 ergibt.

Die zweite Ausgangswelle 6 ragt stirnseitig aus dem Gehäuse 2 und weist endseitig ebenfalls einen Flansch 19 auf, welcher beispielsweise mit einem Rad eines Elektrofahrzeuges gekoppelt werden kann.

Eine erfindungsgemäße Antriebseinheit 1 ermöglicht einen einfachen und gleichzeitig robusten Aufbau und kann mit nur drei Lagern hergestellt werden. Die Antriebseinheit 1 kann insbesondere als Antrieb für ein Elektrofahrzeug eingesetzt werden, sodass sich eine einfache und kostengünstige Konstruktion für ein Elektrofahrzeug ergibt.

## Patentansprüche

1. Antriebseinheit (1) für ein Elektrofahrzeug, aufweisend einen Elektromotor mit einem Rotor (4) und einem Stator (3), welcher Elektromotor auf eine erste Ausgangswelle (5) und eine zweite Ausgangswelle (6) wirkt, wobei die erste Ausgangswelle (5) und die zweite Ausgangswelle (6) koaxial mit dem Rotor (4) sind, **dadurch gekennzeichnet, dass** der Elektromotor als Außenläufermotor ausgebildet und der Rotor (4) starr mit einem Differentialkorb (8) eines Differentialgetriebes (7) verbunden ist, welches Differentialgetriebe (7) zwei Ausgänge aufweist, wobei ein erster Ausgang des Differentialgetriebes (7) starr mit der ersten Ausgangswelle (5) und ein zweiter Ausgang des Differentialgetriebes (7) starr mit der zweiten Ausgangswelle (6) verbunden sind.

2. Antriebseinheit (1) nach Anspruch 1, **dadurch gekennzeichnet, dass** das Differentialgetriebe (7) als Kegel-Differentialgetriebe (7) ausgebildet ist.

3. Antriebseinheit (1) nach Anspruch 1 oder 2, **dadurch gekennzeichnet, dass** ein mit dem Stator (3) starr verbundenes Gehäuse (2) vorgesehen ist, welches den Rotor (4) und das Differentialgetriebe (7) einschließt.

4. Antriebseinheit (1) nach einem der Ansprüche 1 bis 3, **dadurch gekennzeichnet, dass** ein erstes Lager (20) vorgesehen ist, welches die erste Ausgangswelle (5) mit dem Stator (3) verbindet.

5. Antriebseinheit (1) nach einem der Ansprüche 1 bis 4, **dadurch gekennzeichnet, dass** ein zweites Lager (21) vorgesehen ist, welches den Stator (3) mit dem Rotor (4) verbindet.

6. Antriebseinheit (1) nach einem der Ansprüche 1 bis 5, **dadurch gekennzeichnet, dass** ein drittes Lager (22) vorgesehen ist, welches das Gehäuse (2) mit dem Differentialkorb (8) verbindet.

7. Antriebseinheit (1) nach einem der Ansprüche 1 bis 6, **dadurch gekennzeichnet, dass** der Stator (3) einen zentralen ersten Hohlraum (14) aufweist, in welchem die erste Ausgangswelle (5) positioniert ist.

8. Antriebseinheit (1) nach einem der Ansprüche 1 bis 7, **dadurch gekennzeichnet, dass** das Differentialgetriebe (7) an einer Stirnseite des Rotors (4) angeordnet ist.

9. Antriebseinheit (1) nach einem der Ansprüche 1 bis 8, **dadurch gekennzeichnet, dass** der Rotor (4) durch Permanentmagnete (13) ausgebildete Pole aufweist.

10. Antriebseinheit (1) nach einem der Ansprüche 1 bis 9, **dadurch gekennzeichnet, dass** der Stator (3) Spulen (12) aufweist.

11. Antriebseinheit (1) nach einem der Ansprüche 1 bis 10, **dadurch gekennzeichnet, dass** die erste Ausgangswelle (5) und/oder die zweite Ausgangswelle (6) als Hohlwellen ausgebildet sind.

12. Antriebseinheit (1) nach einem der Ansprüche 1 bis 11, **dadurch gekennzeichnet, dass** der Stator (3) einen zweiten, stirnseitig abgeschlossenen, vorzugsweise umlaufenden Hohlraum (14) aufweist.

13. Antriebseinheit (1) nach einem der Ansprüche 1 bis 12, **dadurch gekennzeichnet, dass** der Stator (3) einen inneren Zylinder (10) und einen äußeren Zylinder (11) aufweist, welche durch eine stirnseitige Verbindungsscheibe (15) verbunden sind.

14. Antriebseinheit (1) nach einem der Ansprüche 1 bis 13, **dadurch gekennzeichnet, dass** der Stator (3) einen äußeren Zylinder (11) aufweist, an welchem Spulen (12) angeordnet sind, welcher äußere Zylinder (11) endseitig mit einer normal zu einer Rotationsachse (17) angeordneten, kreisringförmigen Scheibe (16) verbunden ist, an welcher Scheibe (16) die Spulen (12) anliegen.

15. Elektrofahrzeug, insbesondere Elektroauto, aufweisend zumindest eine Batterie und eine durch die Batterie mit Energie versorgte Antriebseinheit (1), **dadurch gekennzeichnet, dass** die Antriebseinheit (1) nach einem der Ansprüche 1 bis 14 ausgebildet ist.
